Europäisches Patentamt

European Patent Office

Office européen des brevets

(11) Veröffentlichungsnummer: **0 296 422**
**A2**

## (12) EUROPÄISCHE PATENTANMELDUNG

(21) Anmeldenummer: 88109264.7

(22) Anmeldetag: 10.06.88

(51) Int. Cl.⁴ **B23K 37/02** , **B23K 37/04** , **B23Q 3/18**

(30) Priorität: 26.06.87 DE 3721073

(43) Veröffentlichungstag der Anmeldung:
28.12.88 Patentblatt 88/52

(84) Benannte Vertragsstaaten:
**AT DE FR GB IT NL SE**

(71) Anmelder: Oxytechnik Ges. für Systemtechnik
mbH
**Frankfurter Strasse 10**
**D-6236 Eschborn 1(DE)**

(72) Erfinder: **Lehmler, Hans Friedrich**
**Ricarda-Huch-Strasse 40**
**D-6380 Bad Homburg(DE)**
Erfinder: **Lentz, Gerhard**
**In der Bitterwiese 13**
**D-6272 Niedernhausen 3(DE)**
Erfinder: **Wilkens, Günter**
**Im Schmidtstück 8**
**D-6233 Kelkheim(DE)**

(74) Vertreter: **Roesner, Werner**
**MESSER GRIESHEIM GmbH Patentabteilung**
**Lärchenstrasse 137 Postfach 83 00 48**
**D-6230 Frankfurt 83(DE)**

(54) **Einrichtung zum Bearbeiten von Böden, insbesondere zum Ausschneiden von Löchern aus Böden.**

(57) Die Erfindung betrifft eine Einrichtung zum Bearbeiten von Behälterböden, die für die Herstellung von großvolumigen Gasbehältern verwendet werden. Um ein Ausschneiden von Löchern aus den Böden (11) sowie ein Positionieren, Heften und Schweißen von Stutzen oder anderen Anbauteilen automatisch zu ermöglichen, wird gemäß der Erfindung ein Industrieroboter (18) als Werkzeughalterung vorgesehen, der entlang einer Linearachse an einem Portal oder Ausleger (13) verfahrbar ist. Unter dem Industrieroboter (18) ist der Boden (11) zwischen mindestens zwei Anlageleisten positioniert, wobei der Ausleger (13) oder das Portal sowie der Industrieroboter (18) mittels Antrieben von einer Steuerung über dem Boden (11) positionierbar ist

Fig. 1

# Einrichtung zum Bearbeiten von Böden, insbesondere zum Ausschneiden von Löchern aus Böden

Die Erfindung betrifft eine Einrichtung zum Bearbeiten von Böden, nach dem Oberbegriff des Anspruchs 1 oder des Anspruchs 13.

Für die Lagerung und den Transport von technischen Gasen werden neben Stahlflaschen auch großvolumige Behälter verwendet. Jeder fertige Behälter besitzt entweder vier oder zwei Behälterböden. Bei einem $H_2$-Speicherbehälter wird aufgrund der einwandigen Bauart jeweils nur ein unterer und ein oberer Boden benötigt. Alle übrigen Behälter haben jeweils zwei untere - und zwei obere Böden. Die verwendeten Böden haben unterschiedliche Formen, je nach Behältertyp. Es sind zu unterscheiden: ebene Böden, z. B. Rohrboden, flacher Vollboden, tiefgewölbter Vollboden, Klöpperboden, Korbboden, Ellipsen-Boden und Halbkugel-Boden (Lexikon "Lueger", Jahrgang 1960, Band 1, Seite 45). Da nicht jeder Behälterboden in seinen Abmessungen gleich ausfällt, sind Durchmesser- und Höhenabweichungen bis zu 30 mm zulässig. Die Anforderungen an den Werkstoff sind je nach Behälterboden unterschiedlich. Während die Böden des Außenbehälters meist aus Baustahl gefertigt werden, werden die Böden der Innenbehälter meistens aus Werkstoffen mit hohen Zähigkeitswerten gefertigt. An den Behälterböden werden Trenn- Schleif- und Fügearbeiten ausgeführt.

Die Böden liegen meist ungereinigt oder sandgestrahlt auf dem Hallenboden und werden zuerst ausgemessen, gekennzeichnet und angerissen, dann werden die angerissenen Löcher mit einem Handbrenner im Gasschmelz-oder Plasmaschneidverfahren ausgeschnitten und anschließend mit einer Schleifmaschine nachgearbeitet. Eine Vorrichtung zum Anreißen von Segmentblechen für Kugelbehälter ist in der DE-PS 11 58 718 offenbart. Die Außenbehälter benötigen einen Teil der Löcher zum Durchführen der Verrohrung des Innenbehälters nach Außen.In die ausgebrannten Löcher der Innenbehälter werden am nächsten Arbeitsplatz unterschiedliche Rohrstutzen geheftet und anschließend von außen und innen verschweißt. An diese Rohrstutzen wird beim Zusammenbau der Behälter die Verrohrung angeschweißt.

Aus der EP-0190674 A1 ist ein Verfahren und eine Vorrichtung zum mechanisierten Brennen von Stutzenlöchern in Behälter bekannt, bei dem an einem Gestell eine horizontal und vertikal verschiebbare Steuereinrichtung angebracht ist. Die Steuereinrichtung dient dazu ein Brenn- und/oder Schweißgerät oder auch eine Schleifmaschine zu halten und in einer vorgegebenen Art zu bewegen. Unter der Steuereinrichtung ist der Behälter auf einem Rollenbock mit antreibbaren Rollen angeordnet.

Zur Benutzung der Steuereinrichtung wird zunächst am Behälterumfang die Stutzenmittelachse angezeichnet. Sodann wird die an dem Gestell angeordnete Steuereinrichtung an der Stutzenmittelachse auf geeignete Weise zentriert. Mittels einer Abtastrolle, die statt des Brenngerätes an der Steuereinrichtung befestigt wird, kann bei entriegelten Antrieben bzw. Stellmotoren die Kontur des Behälters auf dem Umfangskreis des später einzuschweißenden Stutzenloches im Bereich der Stutzenöffnungen manuell abgefahren werden.

Ein Nachteil bei den bisher verwendeten Brennschneideinrichtungen ist darin zu sehen, daß die Steuereinrichtung nur für das Ausbrennen von Stutzenlöchern gebaut werden muß und ferner diese Sondermaschine manuell auf der Behälterumfangslinie zentriert und auf dem Umfangskreis des Loches abgefahren werden müssen. Hinzu kommt, daß die Lochmittelachse und der Lochumfang auf dem Behälter vom Bedienungspersonal angezeichnet werden muß. Unter einem Winkel zur Behälterachse verlaufende Stutzenlöcher können mit dieser Brennschneideinrichtung nicht ausgebrannt werden.

In dem gattungsgemäßen Artikel "Rationalisierung des thermischen Trennens an Behälterböden, ZIS-Mitteilungen, Seiten 298 bis 303, Halle 28, 1986, 3 versucht man die Nachteile, die beim Bau einer Sondermaschine entstehen durch den Aufbau einer Gerätevariante aus bereits vorhandenen Hauptbaugruppen zu vermeiden. Die Schneidanlage besteht im wesentlichen aus einer Dreheinrichtung mit zwei links und rechts an jeweils einer senkrechten Säule angeordneten Auslegern, an denen die Schneidgeräte angeordnet sind. Während beim Schneiden der Mittendurchbrüche der Behälterboden auf der Dreheinrichtung umläuft und der Schneidbrenner stillsteht, wird zum Schneiden der außermittigen Durchbrüche der Schneidbrenner mittels eines Kreisschneidegerätes (ZIS-Mitteilungen 11/84, Seiten 218 bis 223) bewegt. Hierzu ist das Kreisschneidegerät horizontal als auch in seinen Neigungswinkel einstellbar. Wie weiterhin aus dem Bild 3 zu entnehmen ist, kann auch der Boden unter einem Winkel zur Werkstückauflage positioniert werden.

Von Nachteil bei dieser Schneidanlage ist die beschränkte Verwendung auf kleine Böden bis 800 mm Durchmesser- und der große Zeitaufwand, der beim Einstellen des variablen Neigungswinkels und der Horizontalbewegung erforderlich ist. Da die Behälterböden in ihren Abmessungen nicht gleich ausfallen, sind Toleranzen im Durchmesser bis 20 mm und in der Höhe bis zu 30 mm bei Klöpper- und Korbböden zulässig. Diese Toleranzen werden mit der gattungsgemäßen Schneidanlage nicht erfaßt und führen zu Positionsungenauigkeiten. Dreheinrichtungen, wie sie in diesem Artikel beschrieben sind, sind kostengünstig. Auch müssen bei diesem Kreisschneidegerät die Mittelpunkte der zu schneidenden Löcher angerissen werden.

Aus dem Prospekt Ecosytems Automation, "Maris gewölbte Böden Schneiden und Schweißen" ist der Einsatz von Robotern in der Kessel- Ofen- und Behälterbauindustrie bekannt.

Neben diesem Stand der Technik gibt es noch eine Vielzahl von Druckschriften, die sich mit dem Erzeugen der Durchdringungskurven an sich - schneidenden Rohren beschäftigen (DE-OS 2739200, DE-OS 3202439, DE-AS 2246838, DE-OS 3439431).

Der Erfindung liegt die Aufgabe zugrunde, die vorstehend genannten Nachteile bei einer gattungsgemäßen Brennschneideinrichtung der eingangs genannten Art zu beseitigen und eine Steigerung der Flexibilität der Brennschneideinrichtung zu - schaffen, so daß parallel oder unter einem Winkel zur Mittelachse des Behälterbodens verlaufende Löcher ohne vorhergehenden Anriß automatisch und ohne zeitaufwendige Positionierung der Schneidbrennerhalterung ausgeschnitten und wahlweise während des Ausschneidens der Löcher mit einer Schweißfase versehen werden können. Hierbei soll die Werkstückauflage einfach und kostengünstig ausgebildet werden.

Diese Aufgabe wird bei einer gattungsgemäßen Einrichtung durch die kennzeichnenden Merkmale der Ansprüche 1 oder 13 gelöst.

Vorteilhafte Weiterbildungen sind in den Unteransprüchen dargestellt.

Die mit der Erfindung erzielten Vorteile bestehen insbesondere darin, daß der Industrieroboter relativ zum Boden bzw. zur Werkstückauflage zentriert ist und somit manuelle Anzeichnungsvorgänge entfallen. Durch den Anschluß der Achsen des Roboters und der Schwenkachse des Auslegers oder der Säule bzw. der Linearachsen des Querträgers oder des Portals an die Robotersteuerung, in der die Lochdurchmesser als Variable abgelegt sind und die Verbindung der Robotersteuerung mit einem externen Rechner ist es vorteilhaft möglich, nach Eingabe der Form des Bodens, des Durchmessers des Bodens, der Lage der Mittelachse des zu schneidenden Loches, dem Durchmesser des Loches und wahlweise dem Fasenwinkel die Löcher automatisch auszuschneiden. Manuelle Positioniervorgänge könnten entfallen. Durch die Verwendung eines an sich bekannten Industrieroboters entfallen teure Sonderkonstruktionen, die in ihren Einsatzmöglichkeiten beschränkt sind. Besonders vorteilhaft können Behälterböden mit einem Durchmesser bis zu fünf Metern in zwei unter einem Winkel zueinander angeordneten Anlageleisten relativ zur Schwenkachse positioniert und zentriert werden, so daß kostenungünstige Dreheinrichtungen entfallen können. Vorteilhaft sind den Anlageleisten vorzugsweise zwei gegenüberliegende bewegliche Meßfühler zugeordnet, die mit der Robotersteuerung in Verbindung stehen. Über die Meßfühler wird in Verbindung mit den Anlageflächen der Anlageleisten die Ist-Außenkontur des Bodens erfaßt und der Robotersteuerung übermittelt. Durch den positionierbaren Ausleger wird es vorteilhaft möglich, den an dem Ausleger verfahrbaren Industrieroboter in die Nähe des zu bearbeitenden Loches zu verfahren, so daß dieses sich im Arbeitsbereich des Industrieroboters befindet. Vorteilhaft kann mittels einer am freien Ende des Auslegers angeordneten Abstützsäule der Ausleger gegen Biegung gesichert werden. Hierzu weist die Abstützsäule nach einer vorteilhaften Ausbildung vertikal ausfahrende Stützelemente auf, die immer dann, wenn der Ausleger über dem Boden positioniert ist, solange ausfahren, bis sie auf dem Hallenboden auftreffen. Nach einer anderen vorteilhaften Ausbildung ist die Abstützsäule mit einem auf dem Hallenboden oder einer diesem zugeordneten Führungsbahn abrollenden Stützrad versehen.

Gemäß einem weiteren vorteilhaften Ausführungsbeispiel nach der Erfindung ist die Werkzeughalterung als Industrieroboter ausgebildet, der hängend an einer am Querträger eines Portals angeordneten Laufbahn mittels eines Linearantriebes entlang dieser Laufbahn verfahrbar ist, auf der Werkstückauflage mindestens zwei unter einem Winkel zueinander angeordnete Anlageleisten positionierbar sind, die Linearachsen in vorbestimmtem Abstand zu den Anlageleisten angeordnet und der Querträger mittels eines Antriebes in den Linearachsen positionierbar ist und die Antriebe des Querträgers und des Industrieroboters mit einer Robotersteuerung verbunden sind, welche vorzugsweise an einen externen Rechner angeschlossen ist.

Gemäß einem bevorzugten Ausführungsbeispiel nach der Erfindung wird dem Industrieroboter ein Sensor zur Messung der geometrischen Ist-Maße der Böden zugeordnet, mittels welchem vor dem Ausschneiden der Löcher die geometrischen Ist-Maße bestimmbar sind.

Der Sensor kann beispielsweise als Lichtschranke ausgebildet sein, die an dem Industrieroboter befestigt ist. Nach der Eingabe der Daten des zu bearbeitenden Bodens in die Robotersteuerung bzw. den Rechner schwenkt der Ausleger über die Winkelhalbierende der Anlageleisten und der Industrieroboter fährt entlang der an dem Ausleger angeordneten Laufbahn, bis die Lichtstrahlen von der Kante des Bodens reflektiert werden. Durch diese Maßnahme können beliebig viele Meßpunkte angefahren werden, wobei die Soll-Abmessungen der Böden und die relative Lage der Säule bzw. des Portals zu den Anlageleisten ein Anfahren der Meßpunkte im Eilgang ermöglichen.

Vorteilhaft kann nach dem Ausschneiden der Löcher aus den Böden mit einem am Ausleger oder Portal angeordneten zweiten Industrieroboter, der als Werkzeug einen Greifer aufweist, beispielsweise ein Stutzen positioniert werden. Durch den Austausch des Schneidbrenners gegen einen Schweißbrenner kann nun der Stutzen in der positionierten Lage geheftet oder geschweißt werden. Hierbei können vorteilhaft wesentliche Programmteile der Schneidsteuerung verwendet werden.

Ein Ausführungsbeispiel der Erfindung ist in der Zeichnung dargestellt und wird im folgenden näher beschrieben.

Es zeigen:

Fig. 1 eine schematisch dargestellte Seitenansicht der Einrichtung nach der Erfindung;

Fig. 2 eine Draufsicht der Brennschneideinrichtung in schematischer Darstellung;

Fig. 3 eine schematisch dargestellte Seitenansicht der Einrichtung nach der Erfindung.

Das folgende Ausführungsbeispiel bezieht sich im wesentlichen auf den Vorgang des Brennschneidens.

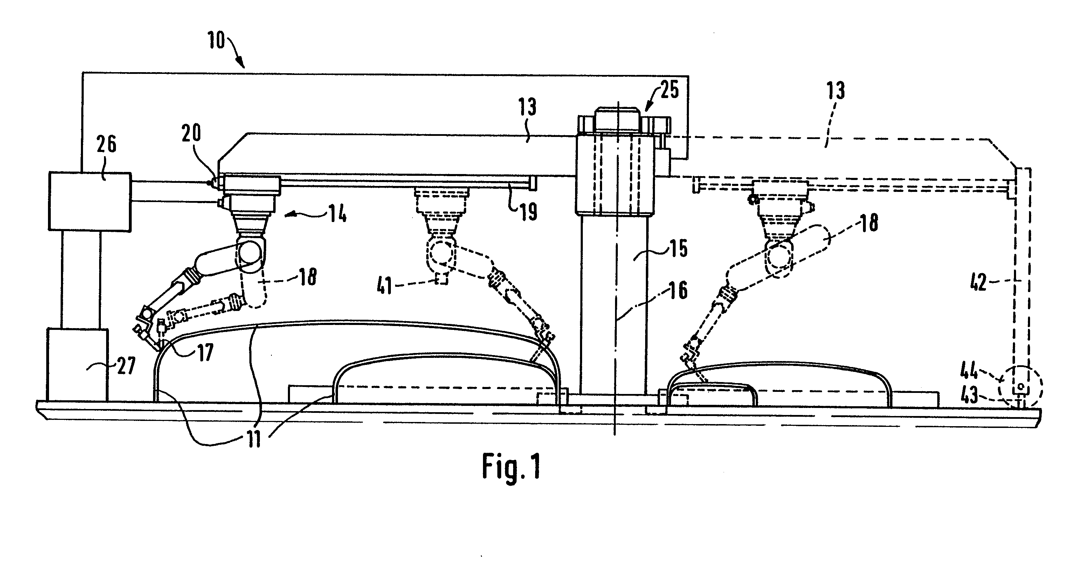

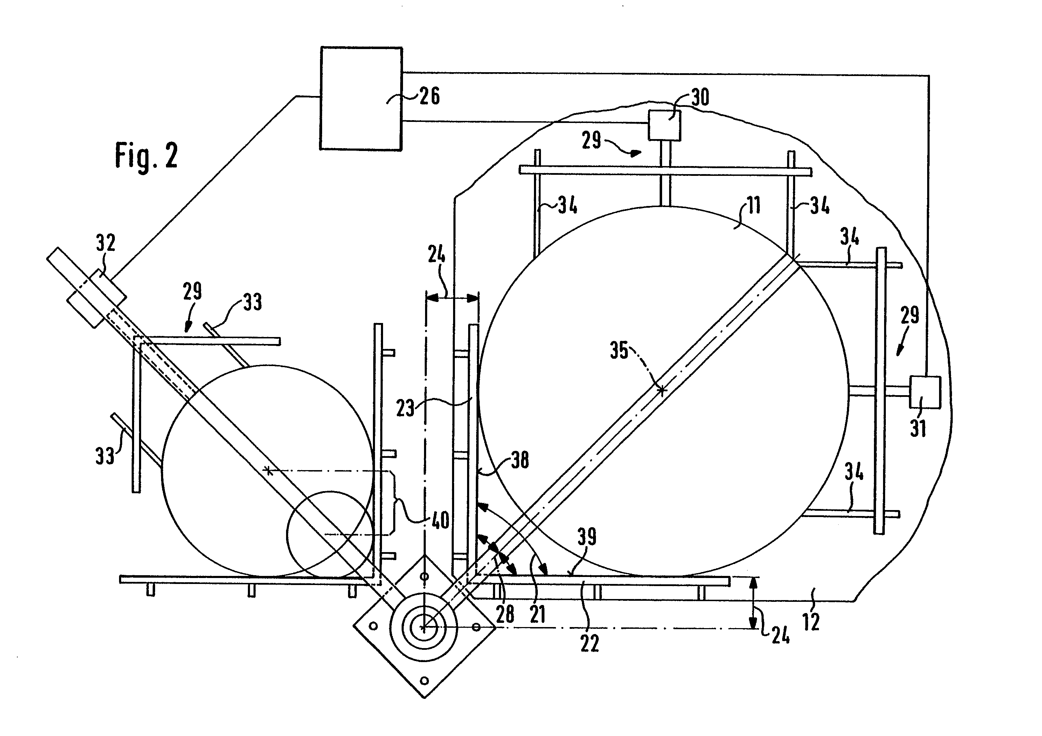

In Fig. 1 ist die Brennschneideinrichtung zum Ausschneiden von Löchern aus Böden 11 in ihrer Gesamtheit mit 10 bezeichnet. Die Brennschneideinrichtung 10 besteht im wesentlichen aus einer horizontalen Werkstückauflage 12 (Fig. 2), auf der der Boden angeordnet ist und einem parallel zur Werkstückauflage 12 positionierbaren Ausleger 13 für die Schneidbrennerhalterung 14. Der Ausleger 13 ist an einer senkrechten Säule 15 angeordnet und um eine Schwenkachse 16 schwenkbar. In der Schneidbrennerhalterung 14 ist ein Schneidbrenner 17, vorzugsweise ein Plasmaschneidbrenner angeordnet. Die Schneidbrennerhalterung 14 ist als Industrieroboter 18, vorzugsweise als Knickarmroboter -oder Gelenkarmroboter ausgebildet, der hängend an einer am Ausleger 13 angeordneten Laufbahn 19 mittels eines Linearantriebes 20 entlang dieser Laufbahn 19 verfahrbar ist. Auf der unter dem Ausleger 13 angeordneten Wrkstückauflage 12 sind mindestens zwei unter einem Winkel 21 zueinander angeordnete Anlageleisten 22, 23 positioniert, deren Anlageflächen 38, 39 sich mindestens über eine Strecke 40 erstrecken, die zwischen dem kleinsten Radius eines Bodens 11 und dem größten Radius eines Bodens 11 gebildet wird. Vorzugsweise sind die Anlageleisten 22,23 unter einem rechten Winkel 21 zueinander angeordnet. Die Schwenkachse 16 des Auslegers 13 ist in vorbestimmtem, gleichen Abstand 24 zu jeder Anlagefläche 38, 39 der Anlageleisten 22, 23 angeordnet, so daß das Zentrum 35 des Bodens 11 nach Eingabe des Durchmessers des Bodens 11 in den Rechner 27 in vorbestimmtem Soll-Abstand zur Schwenkachse 16 positioniert ist. Der Ausleger 13 ist über einen in der Fig. 1 nur schematisch dargestellten Antrieb 25 in der Schwenkachse 16 über dem Boden 11 positionierbar. Um eine einfache Positionierung des Auslegers 13 relativ zum Zentrum 35 des Bodens 11 zu ermöglichen, verläuft die Verlängerung der Winkelhalbierenden 28 des zwischen den Anlageleisten 22, 23 gebildeten rechten Winkels 21 durch die Schwenkachse 16 des Auslegers 13. Der Werkstückauflage 12 sind bewegliche Meßfühler 29 zugeordnet, welche an dem von den Anlageflächen 38, 39 der Anlageleisten 22, 23 nicht umfaßten Umfang des Bodens 11 anlegbar sind und welche mit der Robotersteuerung 26 verbunden sind. Die Meßfühler 29 können hierbei in Form von Spannleisten oder Zentrierwinkeln ausgebildet werden, die über Führungen 33, 34 mittels Antrieben 30, 31, 32 verfahrbar sind. Eine andere vorteilhafte Ausführung besteht darin, daß auf den Anlageleisten 22, 23 nicht näher dargestellte Schwenkarme befestigt sind, die mittels Hydraulikzylinder an dem Umfang des Bodens zur Anlage gebracht werden können. Den Meßfühlern 29 ist selbstverständlich ein nicht näher dargestelltes Wegmeßsystem zugeordnet, so daß nach Anlage der Meßfühler an dem Umfang des Bodens 11 die Ist-Werte des Bodens 11 erfaßt sind und der Ausleger 13 mittels des Antriebes 25 in der Schwenkachse 16 und der Industrieroboter 18 entlang der Laufbahn 19 des Auslegers 13 entsprechend der Ist-Außenkontur des Bodens 11 positionierbar sind.

Um die Programmierung zu vereinfachen, ist es nach einer weiteren Ausführung auch möglich, den gleichen Abstand 24 jeder Anlageleiste 22, 23 entsprechend dem Durchmesser der Böden 11 zu verändern, so daß das Zentrum 35 der Böden immer auf dem gleichen Ort der Werkstückauflage angeordnet ist. Die Anlageleisten 22, 23 sind hierzu mit mindestens einem nicht näher dargestellten Antrieb verbunden, welcher mit der Robotersteuerung 26 verbunden ist. Vorteilhaft liegen während die Anschlagleisten 22, 23 in Richtung des Zentrums des Bodens verfahren werden, die Meßfühler 29 an dem Umfang des Bodens 11 an. Sobald das Zentrum 35 des Bodens 11 über dem immer gleichen Ort der Werkstückauflage 12 angeordnet ist, gibt der Meßfühler 29 ein Signal an die Robotersteuerung 26, die die Bewegung der Anlageleisten 22, 23 abschaltet.

Nach einer weiteren Ausbildung sind die Anlageleisten 22, 23 und die Werkstückauflage 12 mit in Verbindung bringbaren Zentrierelementen versehen. Beispielsweise weisen die Anlageleisten 22, 23 an ihren zur Werkstückauflage 12 zeigenden Unterseiten Zentrierbolzen auf, mit denen sie in entsprechenden Zentrierbüchsen der Werkstückauflage 12 positioniert werden können. Die Positionierung erfolgt bei diesem Ausführungsbeispiel mit fahrbaren Transportmitteln.

In der bevorzugten einfachen Ausführung sind jedoch die Anlageleisten 22, 23 fest mit der Werkstückauflage verbunden, wobei dem Industrieroberter 18 ein Sensor 41 zur Messung der geometrischen Ist-Maße der Böden zugeordnet ist, mittels welchem vor dem Ausschneiden der Löcher die geometrischen Ist-Maße bestimmbar sind. Hierzu fährt der Sensor mit hoher Geschwindigkeit entsprechend einer in der Robotersteuerung abgelegten Suchstrategie zu vorgegebenen geometrischen Orten (Punkten) in der Nähe des Bodens 11, von denen aus er mit geringer Suchgeschwindigkeit die geometrischen Orte (Punkte) des Bodens taktil oder berührungslos abtastet. Bei der Messung der Ist-Maße erzeugt der Sensor 41 ein Signal, welches der Robotersteuerung zugeführt wird. In der Robotersteuerung wird aufgrund dieser Signale das Roboterprogramm an die ermittelten Ist-Maße des Bodens angepaßt und der Industrieroboter entsprechend diesem angepaßten Programm positioniert.

Nach einer vorteilhaften Ausführung ist dem Ausleger 13 eine Abstützsäule 42 zugeordnet, die vertikal ausfahrbare Stützelemente 43 aufweist. Selbstverständlich ist es auch möglich, an der Abstützsäule 42 ein entsprechend der Schwenkbewegung des Auslegers mitrollendes Stützrad anzuordnen.

Durch beide Maßnahmen wird eine Biegung des Auslegers 13 verhindert.

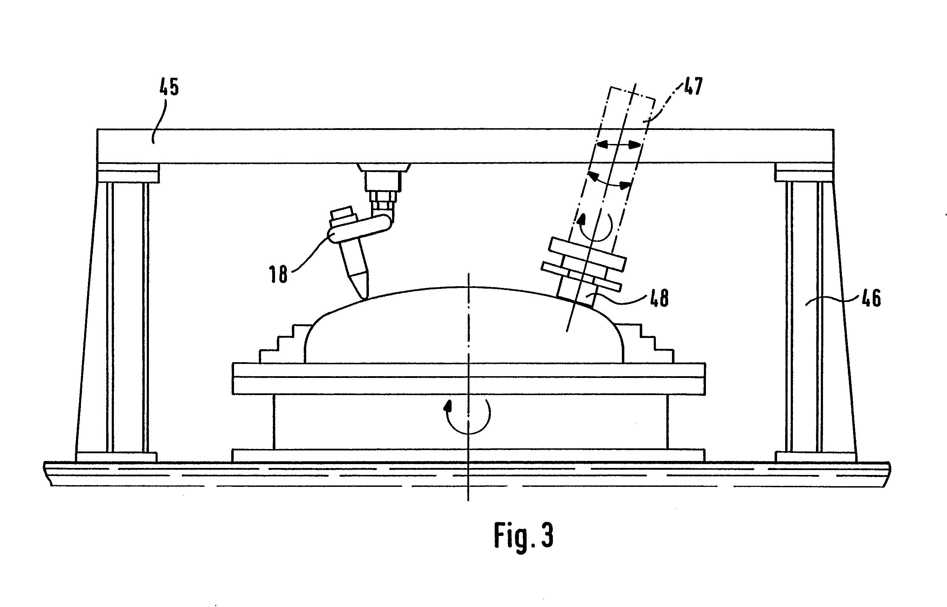

Nach einem weiteren Ausführungsbeispiel (Fig. 3) ist der Industrieroboter 18 hängend an dem Querträger 45 eines Portals 46 angeordnet.

Aus Übersichtsgründen wurden die aus den Figuren 1 und 2 ersichtlichen Bauteile, wie beispielsweise Antriebe, in der Fig. 3 nicht dargestellt.

Wie aus der Fig. 3 ersichtlich, kann das Portal 46 stationär und der Querträger 45 in Längsrichtung auf dem Portal 46 verfahrbar angeordnet sein. Selbstverständlich kann auch der Querträger fest mit dem Portal verbunden sein, welches dann in Längsrichtung verfahrbar ist. Auf dem Querträger 45 ist neben dem Industrieroberter 18 vorteilhaft auch ein Gerät 47 zum Positionieren von Stutzen 48 oder Anbauteilen, wie Transportösen, Überdruckdeckeln usw. an dem Querträger 45 längsverfahrbar angeordnet. Vorteilhaft ist es möglich, nach dem Ausschneiden der Löcher mit dem Gerät 47 die Stutzen oder Anbauteile auf dem Boden lagegerecht zu positionieren und nach einem Austausch des Schneidbrenners gegen einen Schweißbrenner zu heften und/oder zu verschweißen. Vorteilhaft können hierbei wesentliche Teile des Schneidprogramms verwendet werden.

**Ansprüche**

1. Einrichtung zum Bearbeiten von Böden, insbesondere zum Ausschneiden von Löchern aus Böden sowie zum Positionieren, Heften und Schweißen von Stutzen oder Anbauteilen, mit einer horizontalen Werkstückauflage, auf der der Boden angeordnet ist, einem parallel zur Werkstückauflage positionierbaren Ausleger für die Werkzeughalterung, welche an einer senkrechten Säule angeordnet und um eine Schwenkachse schwenkbar ist und einem in der Werkzeughalterung angeordneten Werkzeug,
dadurch gekennzeichnet,
daß die Werkzeughalterung (14) als Industrieroboter (18) ausgebildet ist, der hängend an einer am Ausleger (13) angeordneten Laufbahn (19) mittels eines Linearantriebes (20) entlang dieser Laufbahn (19) verfahrbar ist, auf der Werkstückauflage (12) mindestens zwei unter einem Winkel (21) zueinander angeordnete Anlageleisten (22, 23) positionierbar sind, die Schwenkachse (16) in vorbestimmtem Abstand (24) zu den Anlageleisten (22, 23) angeordnet und der Ausleger (13) mittels eines Antriebes (25) in den Schwenkachse (16) positionierbar ist und die Antriebe (25, 20, 40) des Auslegers (13) und des Industrieroboters (18) mit einer Robotersteuerung (26) verbunden sind, welche vorzugsweise an einen externen Rechner (27) angeschlossen ist.

2. Brennschneideinrichtung nach Anspruch 1, dadurch gekennzeichnet,
daß die Anlageleisten (22, 23) unter einem rechten Winkel (21) zueinander angeordnet sind und die Verlängerung der Winkelhalbierenden (28) durch die Schwenkachse (16) des Auslegers (13) verläuft.

3. Einrichtung nach Anspruch 1 oder 2, dadurch gekennzeichnet,
daß die Anlageleisten (22, 23) Anlageflächen (38, 39) aufweisen, zwischen denen der Boden zentrierbar ist und der Werkstückauflage (12) bewegliche Meßfühler (29) zugeordnet sind, welche an dem von den Anlageflächen (38, 39) der Anlageleisten (22, 23) nicht umfaßten Umfang des Bodens (11) anlegbar sind und die beweglichen Meßfühler (29) mit der Robotersteuerung (26) verbunden sind.

4. Einrichtung nach einem der Ansprüche 1 bis 3,
dadurch gekennzeichnet,
daß der gleiche Abstand (24) jeder Anlageleiste (22, 23) zur Schwenkachse (16) des Auslegers (13) entsprechend den Durchmessern der Böden (11) veränderbar ist, so daß das Zentrum (35) der Böden (11) immer auf dem gleichen Ort der Werkstückauflage (12) angeordnet ist.

5. Einrichtung nach einem der Ansprüche 1 bis 4,
dadurch gekennzeichnet,

daß die Anlageleisten (22, 23) mit mindestens einem Antrieb verbunden sind, welcher mit der Robotersteuerung (26) verbunden ist.

6. Einrichtung nach einem der Ansprüche 1 bis 5,
dadurch gekennzeichnet,
daß die Anlageleisten (22, 23) und die Meßfühler (29) elektrisch miteinander verbunden sind und die Meßfühler (29) beim Erreichen des Ortes ein Steuersignal erzeugen.

7. Einrichtung nach einem der Ansprüche 1 bis 4,
dadurch gekennzeichnet,
daß die Anlageleisten (22, 23) und die Werkstückauflage (12) in Verbindung bringbare Zentrierelemente aufweisen.

8. Einrichtung nach einer der Ansprüche 1 bis 4,
dadurch gekennzeichnet,
daß die Anlageleisten (22, 23) fest mit der Werkstückauflage (12) verbunden sind.

9. Einrichtung nach einem der Ansprüche 1 bis 8,
dadurch gekennzeichnet,
daß der Ausleger (13) an seinem freien Ende mit einer Abstützsäule (42) verbunden ist, welche vertikal ausfahrbare Stützelemente (43) aufweist.

10.Einrichtung nach einem der Ansprüche 1 bis 9,
dadurch gekennzeichnet,
daß die Abstützsäule (42) an ihrem zum Boden gerichteten Ende ein mitrollendes Stützrad (44) aufweist.

11.Einrichtung nach einem der Ansprüche 1 bis 10,
dadurch gekennzeichnet,
daß der Idustrieroboter (18) als Knickarmroboter ausgebildet ist.

12.Einrichtung nach einem der Ansprüche 1, 2 oder 8,
dadurch gekennzeichnet,
daß dem Industrieroboter (18) ein Sensor (41) zur Ermittlung der geometrischen IST-Maße des Bodens zugeordnet ist, welcher beim Abtasten an vorgegebenen geometrischen Orten des Bodens Signale erzeugt, die der Robotersteuerung zuführbar sind und mittels denen eine Anpassung des Roboterprogramms an die IST-Maße des Bodens durchführbar ist und der Industrieroboter 18 entsprechend diesen Ist-Maßen positionierbar ist.

13.Einrichtung zum Bearbeiten von Böden, insbesondere zum Ausschneiden von Löchern aus Böden sowie zum Positionieren, Heften und Schweißen von Stutzen oder Anbauteilen, mit einer horizontalen Werkstückauflage, auf der der Boden angeordnet ist, einem parallel zur Werkstückauflage positionierbaren Querträger für die Werkzeughalterung, welcher einem Portal zugeordnet und entlang von Linearachsen verfahrbar ist und einem in der Werkzeughalterung angeordneten Werkzeug, dadurch gekennzeichnet,
daß die Werkzeughalterung (14) als Industrieroboter (18) ausgebildet ist, der hängend an einer am Querträger (45) angeordneten Laufbahn (19) mittels eines Linearantriebes (20) entlang dieser Laufbahn (19) verfahrbar ist, auf der Werkstückauflage (12) mindestens zwei unter einem Winkel (21) zueinander angeordnete Anlageleisten (22, 23) positionierbar sind, die Linearachsen (16) in vorbestimmtem Abstand (24) zu den Anlageleisten (22, 23) angeordnet und der Querträger (45) mittels eines Antriebes (25) in den Linearachsen (16) positionierbar ist und die Antriebe (25, 20, 40) des Querträgers (45) und des Industrieroboters (18) mit einer Robotersteuerung (26) verbunden sind, welche vorzugsweise an einen externen Rechner (27) angeschlossen ist.

14.Einrichtung nach Anspruch 14,
dadurch gekennzeichnet,
daß dem Industrieroboter (18) ein Sensor (41) zur Ermittlung der geometrischen IST-Maße des Bodens zugeordnet ist, welcher beim Abtasten an vorgegebenen geometrischen Orten des Bodens Signale erzeugt, die der Robotersteuerung zuführbar sind und mittels denen eine Anpassung des Roboterprogramms an die IST-Maße des Bodens durchführbar ist und der Industrieroboter (18) entsprechend diesen Ist-Maßen positionierbar ist.

Fig.1

EP 0 296 422 A2

Fig. 2

Fig. 3